# EUROPEAN PATENT APPLICATION

(11) **EP 4 379 837 A1**
(43) Date of publication of application: **05.06.2024**
(21) Application number: 22932658.2
(22) Date of filing: 24.03.2022
(51) Int. Cl.: H01M 4/13

(54) **ELECTRODE SHEET, ELECTRODE ASSEMBLY AND MANUFACTURING METHOD AND APPARATUS THEREFOR, BATTERY, AND ELECTRICAL DEVICE**

(71) Applicant: Contemporary Amperex Technology Co., Limited, Ningde, Fujian 352100 (CN)
(72) Inventor: XU, Hu, Ningde, Fujian 352100 (CN); JIN, Haizu, Ningde, Fujian 352100 (CN)
(74) Representative: Rowlands, Stuart Michael
(86) International application number: PCT/CN2022/082720
(87) International publication number: WO 2023/178593

(57) **Abstract**

Embodiments of the present application provide an electrode sheet, an electrode assembly and a manufacturing method and apparatus therefor, a battery, and an electrical device. The electrode sheet has a first end face (101) in a first direction (x) and a second end face (102) in a second direction (y), the second direction (y) being perpendicular to the first direction (x); at least one of the first end face (101) and the second end face (102) has a special-shaped surface (N), a partial area of the special-shaped surface (N) in a third direction (Z) deviating from a reference plane (P), the reference plane (P) being configured to be perpendicular to the first direction (x) and being located on the outermost edge in the first direction (x) by means of the special-shaped surface (N), and the third direction (Z) being perpendicular to the first direction (x) and the second direction (y).

## Description

### TECHNICAL FIELD

This application relates to the field of battery technologies, and in particular, to an electrode plate, an electrode assembly and a manufacturing method and apparatus thereof, a battery, and an electric apparatus.

### BACKGROUND

Batteries such as lithium-ion batteries have been widely used in electric vehicles due to the advantages of high energy density, high power density, long cycle life, long storage time, and the like.

However, improvement of operating performance of batteries in electric vehicles in long-term use has long been a challenge in the industry.

### SUMMARY

This application is intended to guarantee performance of batteries after long-term use.

According to a first aspect of this application, an electrode plate is provided, having a first end surface in a first direction and a second end surface in a second direction, the second direction being perpendicular to the first direction; where
at least one of the first end surface and the second end surface has a shaped surface, the shaped surface has a partial region deviating from a reference plane along a third direction, the reference plane is constructed to be perpendicular to the first direction and pass the outermost edge of the shaped surface in the first direction, and the third direction is perpendicular to the first direction and the second direction.

In an embodiment, at least one of the first end surface and the second end surface in the electrode plate is arranged as the shaped surface, so that when the electrode plate forms a multi-layer staked and wound electrode assembly by winding, or a plurality of electrode plates are stacked along the third direction to form a laminated electrode assembly, formation of a thick right-angle step at the end of the electrode plate can be avoided. As an electrode assembly swells after long-term use of a battery cell, the electrode assembly exerts an acting force on a housing after swelling, and the housing exerts a reaction force on the electrode assembly at the same time. In this application, reduced thickness at the end of the electrode plate can alleviate the problem of stress concentration when the electrode plate is subjected to the reaction force exerted by the housing on the electrode assembly, prevent displacement or deformation of the electrode plate at the end, and prevent deformation of the electrode assembly, thus alleviating fall-off of an active substance from the electrode plate due to extrusion. Therefore, such improvements can guarantee performance of the battery cell after long-term use.

In some embodiments, the shaped surface is flat and forms a preset angle with the reference plane, the preset angle being not equal to 9°.

In these embodiments, the shaped surface is arranged to be inclined for the electrode plate to form a wedge shape at the end, so that when the electrode plate is subjected to an acting force at the end, transfer of the acting force to an adjacent electrode plate can be reduced, a local pressure at the end can be reduced, and the stress concentration can be alleviated. In addition, when the end of the electrode plate is arranged as an inclined surface, the processing technology is simple, facilitating setting of a suitable tilt angle as required, and it is also easy to guarantee consistency of tilt angles, so as to guarantee consistency of sizes of the electrode plates during mass production, thus guaranteeing consistent performance of the battery cells.

In some embodiments, the shaped surface extends in a curved way along the third direction.

In these embodiments, the shaped surface is arranged as a curved surface, so that a shape of the end surface of the electrode plate can be flexibly arranged based on the problem of stress concentration in different electrode assemblies during operation, the problem of short circuit caused by burrs at the end of the electrode plate damaging a separator, and stresses at two ends of the electrode plate in the thickness direction, maintaining good performance of a battery cell even after long-term operation.

In some embodiments, the shaped surface is an arc surface that protrudes outward in a middle region in the third direction.

In these embodiments, the shaped surface is arranged as an arc surface, which is easy to process and shape, so as to guarantee consistency of sizes of the electrode plates during mass production, thus guaranteeing consistent performance of the battery cells. Moreover, the shaped surface protruding outward can reduce the contact between two ends of end surfaces of the electrode plate in the thickness direction and adjacent electrode plates or the housing, preventing the edge part from forming burrs to damage the separator, and reducing the risk of short circuit in the operating process of the electrode assembly; and the electrode plate has no sharp corner part at the end, which can enhance the overall strength of the end of the electrode plate, and greatly reduce the risk of fracture of the end of the electrode plate during assembly or battery use. In addition, both sides of the end of the electrode plate in the thickness direction comes in contact with other electrode plates or the housing, and the arc surface that protrudes outward in the middle region can make the end of the electrode plate symmetrical on two sides in the thickness direction, which facilitates a more uniform distribution of stresses on both sides, thus reducing stress concentration.

In some embodiments, a transition angle is provided between adj acent edges of the shaped surface and a side surface of the electrode plate, and the side surface of the electrode plate is perpendicular to the third direction.

In these embodiments, provision of the transition angle at the joint between the shaped surface and the side surface of the electrode plate can avoid a sharp part at the end of the electrode plate, thus preventing formation of burrs or the sharp part from damaging the separator when extruded, and reducing the risk of short circuit during operation of the electrode assembly; and can also enhance strength of the end of the electrode plate at the edge, thus reducing the risk of deformation of the electrode plate at the end or fall-off of the active substance. In addition, provision of the transition angle can reduce transfer of an acting force from the end of the electrode plate to an adjacent electrode plate, thus reducing the overall deformation of the electrode assembly.

In some embodiments, the electrode plate includes:
a current collector; and
a coating provided on a side surface of the current collector in the third direction;
where the shaped surface includes a first segmented surface and a second segmented surface, the first segmented surface is located on the current collector, the second segmented surface is located on the coating, and the second segmented surface is retracted inward a preset distance along the first direction with respect to the first segmented surface.

In these embodiments, provision of the coating on one side at the end position of the current collector or no coating provided on either side of the current collector can reduce thickness of a step formed at the end position of the electrode plate, so that the step facilitates a gradual change in stress when subjected to an external force, so as not to generate large stress.

In some embodiments, the electrode plate includes:
a current collector; and
a coating provided on a side surface of the current collector in the third direction; where
the current collector includes a body portion and a tab portion, the tab portion protrudes outward from an end surface of the body portion in the second direction, and the shaped surface is provided in a region of the second end surface without the coating excluding the tab portion.

Since the second end surface of the electrode plate is thick in the region with the coating and is thin in the region of the tab portion without the coating where only the coil is present, the shaped surface being provided in the region of the second end surface without the coating excluding the tab portion can prevent the formation a thick step on the second end surface and reduce the processing difficulty.

In some embodiments, the electrode plate is a positive electrode plate, the coating includes an active substance layer and an insulating layer provided side by side along the second direction, the insulating layer is located on a side of the active substance layer closer to the tab portion in the second direction, and the shaped surface is coated with a polymer generated by melting of the insulating layer.

When the shaped surface is formed using laser die cutting, heat is generated. For the second end surface on the side closer to the tab portion, the insulating layer closer to the second end surface is melted, and the polymer generated covers the shaped surface, so as to protect the shaped surface, prevent metal powder or active substance powder generated on the die-cut surface from falling into the electrode assembly during assembly or use, which otherwise causes short circuit, and also prevent a sharp part or burrs from being formed on the die-cut surface to avoid short circuit caused by pierced separator during assembly or use.

According to a second aspect of this application, an electrode assembly is provided, including a first electrode plate and a second electrode plate with opposite polarities, where at least one of the first electrode plate and the second electrode plate is the electrode plate according to the foregoing embodiments.

In some embodiments, the electrode assembly is a wound structure, and in a winding direction of the wound structure, at least one of a first starting end and a first finishing end of the first electrode plate and at least one of a second starting end and a second finishing end of the second electrode plate are provided with the shaped surface.

In some embodiments, the shaped surface is inclined, and the shaped surface of at least one of the first finishing end and the second finishing end forms an acute angle with an inner side surface in a radial direction of the wound structure; and/or the shaped surface of at least one of the first starting end and the second starting end forms an acute angle with an outer side surface in the radial direction of the wound structure.

In some embodiments, the first electrode plate is a negative electrode plate, the second electrode plate is a positive electrode plate, and in a winding axis consistent with the second direction, a second end surface of the first electrode plate exceeds a second end surface of the second electrode plate, the second end surface of the first electrode plate having the shaped surface.

According to a third aspect of this application, a battery cell is provided, including: a housing having an opening; the electrode assembly according to the foregoing embodiments, disposed in the housing; and an end cover assembly configured to close the opening.

According to a fourth aspect of this application, a battery is provided, including a box and the battery cell according to the foregoing embodiments, where the battery cell is disposed in the box.

According to a fifth aspect of this application, an electric apparatus is provided, including the battery according to the foregoing embodiments, where the battery is configured to supply electric energy for the electric apparatus.

According to a sixth aspect of this application, a manufacturing method of electrode assembly is provided, including:
an electrode plate providing step: providing a first electrode plate and a second electrode plate with opposite polarities, where at least one of the first electrode plate and the second electrode plate is an electrode plate having a structure as follows: the electrode plate has a first end surface in a first direction and a second end surface in a second direction, the second direction being perpendicular to the first direction, at least one of the first end surface and the second end surface has a shaped surface, the shaped surface has a partial region deviating from a reference plane along a third direction, the reference plane is constructed to be perpendicular to the first direction and pass the outermost edge of the shaped surface in the first direction, and the third direction is perpendicular to the first direction and the second direction; and
an electrode forming step: assembling the first electrode plate and the second electrode plate into the electrode assembly.

According to a seventh aspect of this application, a manufacturing apparatus of electrode assembly is provided, including:
an electrode plate providing device configured to provide a first electrode plate and a second electrode plate with opposite polarities, where at least one of the first electrode plate and the second electrode plate is an electrode plate having a structure as follows: the electrode plate has a first end surface in a first direction and a second end surface in a second direction, the second direction being perpendicular to the first direction, at least one of the first end surface and the second end surface has a shaped surface, the shaped surface has a partial region deviating from a reference plane along a third direction, the reference plane is constructed to be perpendicular to the first direction and pass the outermost edge of the shaped surface in the first direction, and the third direction is perpendicular to the first direction and the second direction; and
an electrode forming device configured to assemble the first electrode plate and the second electrode plate into the electrode assembly.

### BRIEF DESCRIPTION OF DRAWINGS

To describe the technical solutions of the embodiments of this application more clearly, the following briefly describes the accompanying drawings required for describing the embodiments of this application. It will be apparent that the accompanying drawings described below show merely some embodiments of this application, and persons of ordinary skill in the art may still derive other drawings from the accompanying drawings without creative efforts.
FIG. 1 is a schematic structural diagram of some embodiments of a battery installed in a vehicle according to this application.
FIG. 2 is an exploded view of some embodiments of a battery according to this application.
FIG. 3 is a schematic structural diagram of embodiments of a battery cell according to this application.
FIG. 4 is a front view of some embodiments of a flat electrode assembly according to this application.
FIG. 5 is an A-A sectional view of FIG. 4.
FIG. 6 is a B-B sectional view of FIG. 4.
FIG. 7 is an enlarged view of position C in FIG. 6.
FIG. 8 is a schematic structural diagram of some embodiments of a negative electrode plate according to this application.
FIG. 9 is a schematic structural diagram of some embodiments of a positive electrode plate according to this application.
FIG. 10 is a side view of some embodiments in which a shaped surface of an electrode plate according to this application is inclined.
FIG. 11 is a schematic diagram of the force principle of the electrode plate shown in FIG. 10.
FIG. 12 is a side view of an electrode plate according to this application with a shaped surface being a circular arc surface.
FIG. 13 is a side view of an electrode plate according to this application with a transition surface at an edge of a shaped surface.
FIG. 14 is a side view of an electrode plate according to this application with a coating retracted inward a preset distance with respect to a current collector.
FIG. 15 is a schematic diagram of some embodiments of an end surface of a cylindrical electrode assembly according to this application.
FIG. 16 is an enlarged view of position C in FIG. 12.
FIG. 17 is an enlarged view of position D in FIG. 12.
FIG. 18 is a schematic flowchart of some embodiments of a manufacturing method of electrode assembly according to this application.

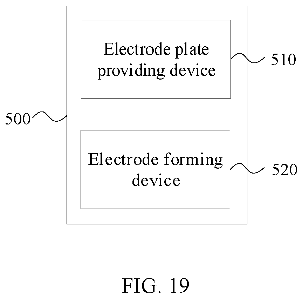

FIG. 19 is a schematic diagram of some embodiments of the module composition of a manufacturing apparatus of electrode assembly according to this application.

In the accompanying drawings, the figures are not drawn to scale.

Description of reference signs:
10. electrode plate; 101. first end surface; 102. second end surface; 102A. first end surface segment; 102B. second end surface segment; 102C. third end surface segment; 102D. fourth end surface segment; 11. current collector; 111. body portion; 112. tab portion; 12. coating; 121. active substance layer; 122. insulating layer; 13. transition angle; N. shaped surface; N1. first segmented surface; N2. second segmented surface; P. reference plane;
100. electrode assembly; 100'. electrode body; 100A. straight segment; 100B. turned segment; 110. first electrode plate. 120. second electrode plate; 130. separator; 112A. first tab; 112B. second tab; K. winding axis; S1. first finishing end; S2. second finishing end; E1. first starting end; E2. second starting end;
200. battery cell; 210. housing; 220. end cover assembly; 221. end cover body; 222. electrode terminal; 230. adapter;
300. battery; 301. box; 301A. accommodating body; 301B. cover body;
400. vehicle; 401. axle; 402. wheel; 403. motor; 404. controller;
500. manufacturing apparatus; 510. electrode plate providing device; and 520. electrode forming device.

### DESCRIPTION OF EMBODIMENTS

The following further describes implementations of this application in detail with reference to the accompanying drawings and embodiments. The following detailed description of embodiments and the accompanying drawings are intended to illustrate the principle of this application rather than to limit the scope of this application, meaning this application is not limited to the embodiments as described.

In the description of the embodiments of this application, the term "a plurality of" means more than two (inclusive). Similarly, "a plurality of groups" means more than two (inclusive) groups, and "a plurality of pieces" means more than two (inclusive) pieces.

The orientations or positional relationships indicated by the terms "upper", "lower", "left", "right", "inside", "outside", and the like used in this application are merely for ease of description of this application rather than indicating or implying that the means mentioned must have specific orientations or must be constructed or manipulated according to specific orientations, and therefore shall not be construed as any limitations on the protection scope of this application.

In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error. The orientation terms appearing in the following description all are directions shown in the figures, and do not limit the specific structure of the application.

In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In this specification, reference to "embodiment" means that specific features, structures or characteristics described with reference to this embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

A battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

Currently, a battery cell typically includes a housing and an electrode assembly accommodated in the housing, and an electrolyte is filled into the housing. The electrode assembly is mainly formed by stacking or winding a first electrode plate and a second electrode plate with opposite polarities, and is generally provided with a separator between the first electrode plate and the second electrode plate. Parts of the first electrode plate and the second electrode plate coated with coatings constitute a body portion of the electrode assembly, while parts of the first electrode plate and the second electrode plate not coated with coatings separately constitute a first tab and a second tab. In a lithium-ion battery, the first electrode plate may be a positive electrode plate including a positive electrode current collector and positive electrode coatings on two sides of the positive electrode current collector, where a material of the positive electrode current collector may be, for example, aluminum, and the positive electrode coating may be, for example, lithium cobaltate, lithium iron phosphate, lithium ternary, or lithium manganate; and the second electrode plate may be a negative electrode plate including a negative electrode current collector and negative electrode coatings on two sides of the negative electrode current collector, where a material of the negative electrode current collector may be, for example, copper, and the negative electrode coating may be, for example, graphite or silicon. The first tab and the second tab may both be located at one end of the body portion or be located at two ends of the body portion respectively. During charging and discharging of the battery cell, a positive electrode coating and a negative electrode coating react with the electrolyte, and the tabs are connected to the electrode terminals to form a current loop.

Currently, batteries have the problem of performance degradation and poor operating reliability after long-term use. The inventors have found through research that, for example, for a wound electrode assembly, the main cause of the problem is that the starting end of winding and the finishing end of winding of an electrode plate are displaced, causing the finishing end of winding or the starting end of winding to deform, or a central hole of the electrode assembly to collapse; and in addition, an active substance on the electrode plate also falls off.

Through analysis, the main reason for the above phenomena of the electrode assembly is that the electrode assembly swells during use, the electrode assembly exerts an acting force on a housing after swelling, and the housing exerts a reaction force on the electrode assembly at the same time. Since the cutting edges of the electrode plate are all right-angled, right-angle steps are formed at both the finishing end of winding and the starting end of winding for the first electrode plate and the second electrode plate. When an outer layer of the electrode assembly is subjected to the reaction force from the housing, the finishing end of winding of the electrode plate experiences the problem of stress concentration, leading to displacement or deformation of the finishing end of winding, and the active substance falls off under the extrusion of the housing. In addition, the stress concentration on the outer layer is transferred toward an inner layer, which causes deformation of the entire electrode assembly, leads to displacement or deformation of the starting end of winding as well, and may also cause the central hole to collapse.

Similarly, at the end of the electrode assembly in the winding direction, because the negative electrode plate exceeds the positive electrode plate in width, and the positive electrode plate is sandwiched between adjacent negative electrode plates, when the positive electrode plate has a right-angle step at the end in the width direction, the problem of stress concentration also occurs under the extrusion of multi-layer electrode plates.

To solve the problem of stress concentration on the electrode plate after long-term use of battery, the inventors have come up with fundamentally alleviating stress concentration by changing the structure of the electrode plate, which does not require improvement on the internal structure of the battery cell.

The battery cell in the embodiments of this application is applicable to batteries and electric apparatuses using a battery.

An electric apparatus may be a mobile phone, a portable device, a laptop, an electric bicycle, an electric vehicle, a ship, a spacecraft, an electric toy, an electric tool, or the like. For example, the spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

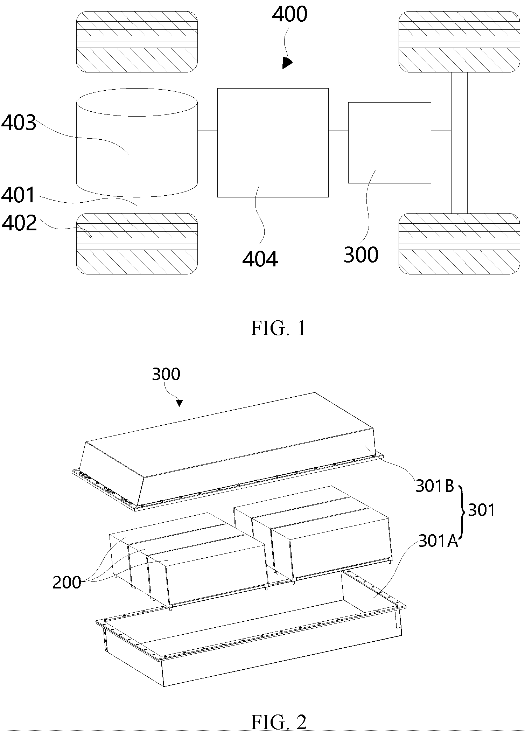

As shown in FIG. 1, the electric apparatus may be a vehicle 400, for example, a new energy vehicle, where the new energy vehicle may be a battery electric vehicle, a hybrid electric vehicle, a range-extended vehicle, or the like. Alternatively, the electric apparatus may be an unmanned aerial vehicle, a ship, or the like. Specifically, the vehicle 400 may include axles 401, wheels 402 connected to the axles 401, a motor 403, a controller 404, and a battery 300, where the motor 403 is configured to drive the axle 401 to rotate, the controller 404 is configured to control the work of the motor 403, and the battery 300 may be disposed at the bottom, front, or rear of the vehicle 400 for supplying electric energy for the work of the motor 403 and other components in the vehicle.

As shown in FIG. 2, a battery 300 includes a box 301 and a battery cell 200. In the battery 300, one or more battery cells 200 may be provided. If a plurality of battery cells 200 are provided, the plurality of battery cells 200 may be directly connected in series, parallel, or series-parallel, where being connected in series-parallel means a combination of series and parallel connections of the plurality of battery cells 200. It is possible that the plurality of battery cells 200 are connected in series, parallel, or series-parallel first to form a battery module and then a plurality of battery modules are connected in series, parallel, or series-parallel to form an entirety which is accommodated in the box 301. It is also possible that all the battery cells 200 are directly connected in series, parallel, or series-parallel to form an entirety which is then accommodated in the box 301.

The box 301 has a hollow structure inside, for example, the box 301 may include an accommodating body 301A and a cover body 301B. The accommodating body 301A and the cover body 301B are snap-fitted together. For example, the accommodating body 301A and the cover body 301B each may be a hollow cuboid and have only one face with an opening, where the opening of the accommodating body 301Ais disposed opposite the opening of the cover body 301B, and the accommodating body 301A and the cover body 301B are snap-fitted to form the box with a closed chamber. Alternatively, the accommodating body 301Ais a cuboid with an opening and the box cover body 301B is plate-shaped, or the cover body 301B is a cuboid with an opening and the accommodating body 301A is plate-shaped, and the accommodating body 301A and the cover body 301B are disposed opposite each other and snap-fitted to form the box with a closed chamber. The plurality of battery cells 200 are connected in parallel, series, or series-parallel, and then placed into the closed chamber formed after the accommodating body 301A and the cover body 301B are snap-fitted.

The battery cell 200 may be, for example, a lithium-ion secondary battery, a lithium-ion primary battery, a lithium-sulfur battery, a sodium-lithium-ion battery, or a magnesium ion battery.

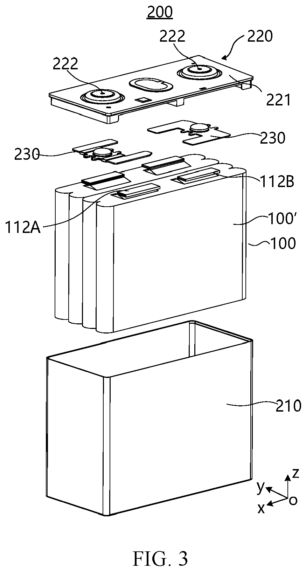

In some embodiments, as shown in FIG. 3, the battery cell 200 includes a housing 210, an electrode assembly 100, an end cover assembly 220, and two adapters 230. The housing 210 has an opening. The end cover assembly 220 closes the opening and is connected to the housing 210 to form an enclosure of the battery cell 200. The electrode assembly 100 is disposed in the housing 210, and an electrolyte is filled in the housing 210.

Based on actual use requirements, one or more electrode assemblies 100 may be provided. The electrode assembly 100 is formed by stacking or winding a first electrode plate and a second electrode plate with opposite polarities, and a separator is generally provided between the first electrode plate and the second electrode plate. Parts of the first electrode plate and the second electrode plate coated with coatings constitute an electrode body 100' of the electrode assembly 100, while parts of the first electrode plate and the second electrode plate not coated with coatings separately constitute a first tab 112A and a second tab 112B.

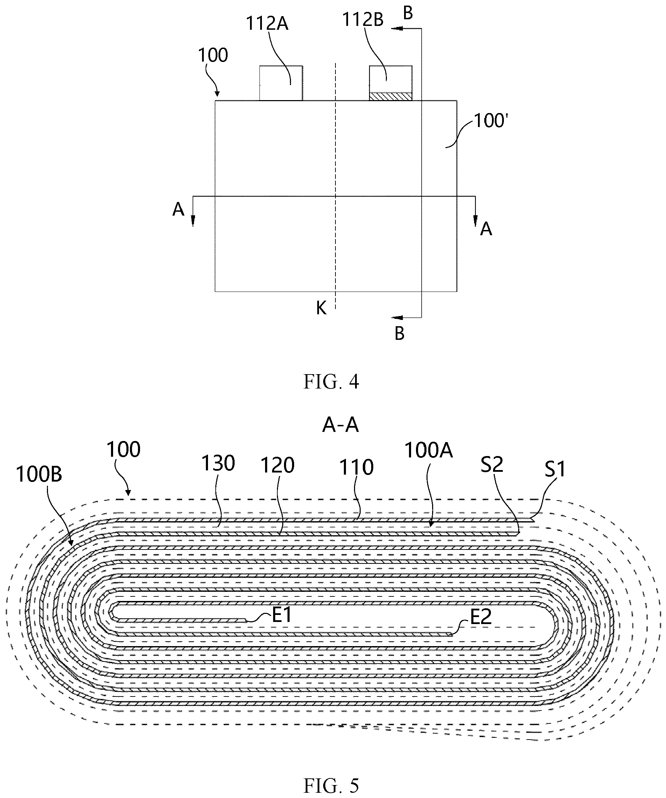

For example, in a lithium-ion battery, FIG. 4 is a front view of a wound electrode assembly 100, and a first tab 112A and a second tab 112B may be led out from an electrode body 100' along a same end of a winding axis K or led out from of the electrode body 100' respectively along two ends of the winding axis K.

FIG. 5 is an A-A sectional view of the electrode assembly 100 shown in FIG. 4. The electrode assembly 100 is flat and has two parallel and opposite straight segments 100A and two opposite turned segments 100B, the turned segments 100B being connected to the two flat segments 100A on a same end. The electrode assembly 100 is a wound structure formed by winding a first electrode plate 110, a second electrode plate 120, and a separator 130, the separator 130 being sandwiched between the first electrode plate 110 and the second electrode plate 120. In a winding direction of the wound structure, the first electrode plate 110 has a first starting end E1 and a first finishing end S1, and the second electrode plate 120 has a second starting end E2 and a second finishing end S2.

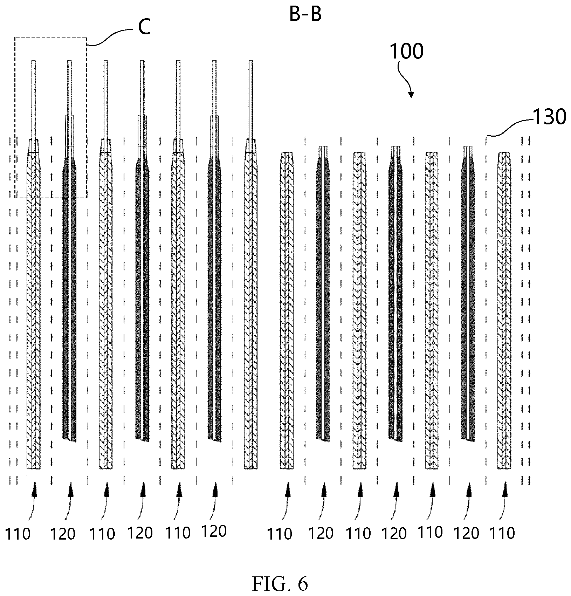

FIG. 6 is a B-B sectional view of the electrode assembly 100 shown in FIG. 4. In one same straight segment 100A, the first electrode plate 110 and the second electrode plate 120 are arranged alternately. If the first electrode plate 110 is a negative electrode plate and the second electrode plate 120 is a positive electrode plate, an end surface of the first electrode plate 110 in the winding axis K exceeds the second electrode plate 120.

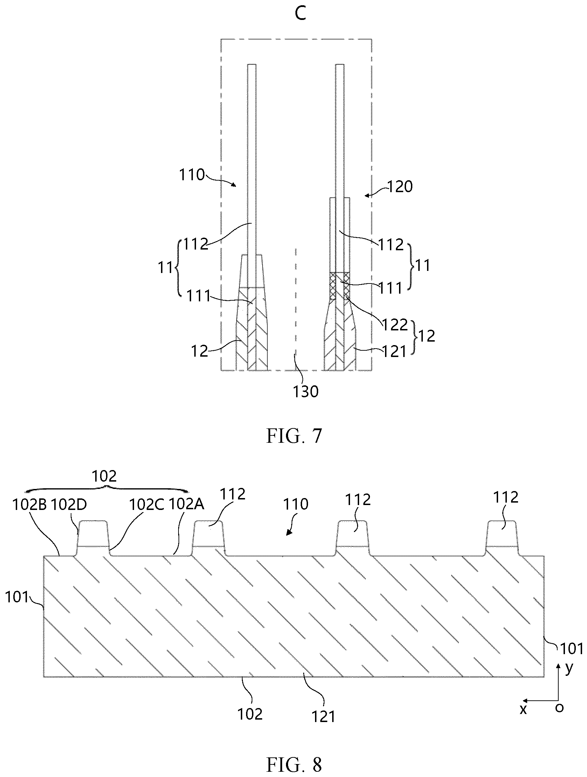

FIG. 7 is an enlarged view of position A in FIG. 6. The first electrode plate 110 and the second electrode plate 120 each include a current collector 11 and a coating 12 provided on a side surface of the current collector 11 in a thickness direction thereof. The coating 12 may be provided on both sides of the current collector 11, and for the innermost-layer or outermost-layer electrode plate, the coating 12 may be provided only on a single side of the current collector 11. The current collector 11 may include a body portion 111 and a tab portion 112, the tab portion 112 protruding outward from an end surface of the body portion 111 along the winding axis K. After winding of the first electrode plate 110 and the second electrode plate 120, a plurality of tab portions 112 of the first electrode plate 110 are stacked to form a first tab 112A, and a plurality of tab portions 112 of the second electrode plate 120 are stacked to form a second tab 112B.

FIG. 8 is a schematic structural diagram of the first electrode plate 110. For example, the first electrode plate 110 is a negative electrode plate. The current collector 11 may be copper. The coating 12 is a negative electrode active substance, which may be graphite, silicon, or the like. If a length direction of the first electrode plate 110 is defined as a first direction x and a width direction thereof is defined as a second direction y, a coating width of the coating 12 in the second direction y exceeds an edge of the body portion 111 to cover the root of the tab portion 112.

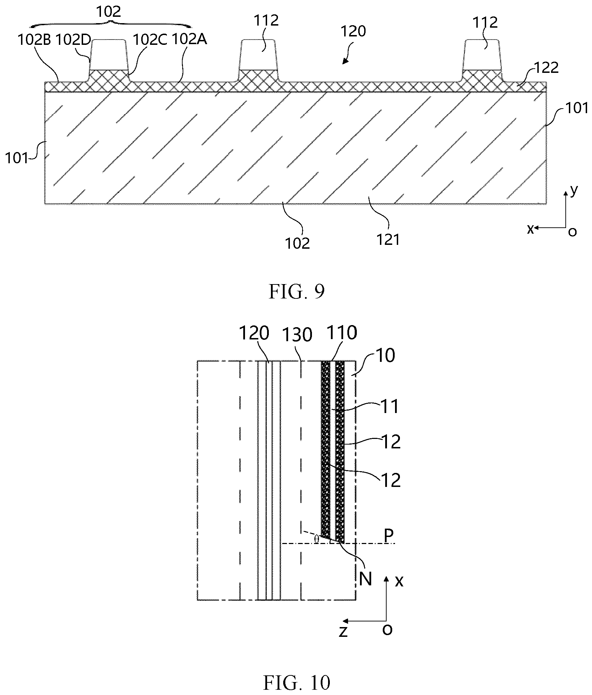

FIG. 9 is a schematic structural diagram of the second electrode plate 120. For example, the first electrode plate 120 is a positive electrode plate. The current collector 11 may be aluminum. The coating 12 may include an active substance layer 121 and an insulating layer 122 provided side by side along the second direction y, the insulating layer 122 is located on a side of the active substance layer 121 closer to the tab portion 112 in the second direction y, and the active substance layer 121 may use lithium cobaltate, lithium iron phosphate, lithium ternary, lithium manganate, or the like. The insulating layer 122 may be thinner than the active substance layer 121, and a slope is used for transition at a joint therebetween. By providing the insulating layer 122 and making an end of the body portion 111 of the negative electrode plate in the winding axis K direction closer to the tab portion 112 be located in a region where the insulating layer 122 is located, on the basis of satisfying that the active substance layer 121 of the negative electrode exceeds the active substance layer 121 of an adjacent positive electrode along the winding axis K, the risk of a short circuit occurring between the positive electrode plate and the negative electrode plate after metal scraps pierce the separator 130 can be reduced.

A structure of an electrode plate 10 is described in detail below. The electrode plate 110 may be the first electrode plate 110 or the second electrode plate 120 mentioned above.

In some embodiments, as shown in FIG. 10, the electrode plate 10 has a first end surface 101 in a first direction x and a second end surface 102 in a second direction y, the second direction y being perpendicular to the first direction x. At least one of the first end surface 101 and the second end surface 102 has a shaped surface N, the shaped surface N has a partial region deviating from a reference plane P along a third direction z, the reference plane P is constructed to be perpendicular to the first direction x and pass the outermost edge of the shaped surface N in the first direction x, and the third direction z is perpendicular to the first direction x and the second direction y.

The electrode plate 10 is roughly in an elongated strip structure, and the electrode plate 10 may be the positive electrode plate shown in FIG. 4 or the negative electrode plate shown in FIG. 5. The first direction x and the second direction y may be located in a plane perpendicular to a thickness direction of the electrode plate 10, the first direction x may be a length direction or width direction of the electrode plate 10, and the third direction z is consistent with the thickness direction of the electrode plate 10.

For example, if the first direction x is the length direction, the first end surface 101 may refer to two end surfaces of the electrode plate 10 in the length direction, and the second end surface 102 may refer to two end surfaces of the electrode plate 10 in the width direction. The second end surface 102 on one side extends along the first direction x and is provided with no tab portion 112, and the second end surface 102 on the other side is provided with a tab portion 112 in a zigzag shape. If the first direction x is the width direction, the positions of the first end surface 101 and the second end surface 102 are reversed. The electrode plate 10 may be formed by cutting at the positions of the first end surface 101 and the second end surface 102, or may be directly formed to a desired size in other ways.

As shown in FIG. 10, at least one of the first end surface 101 and the second end surface 102 has a shaped surface N. To be specific, one, two, or three of the two first end surfaces 101 and the two second end surfaces 102 are arranged as the shaped surface(s) N, while the other end surface(s) is arranged as a plane perpendicular to a side surface of the electrode plate 10 (that is, extending along the third direction z); or all four end surfaces are arranged as shaped surfaces N. Optionally, on the end surface where the shaped surface N is arranged, the entire end surface may be arranged as the shaped surface, or only a partial region of the end surface is arranged as the shaped surface N.

The reference plane P is constructed to be perpendicular to the first direction x and pass the outermost edge of the shaped surface N in the first direction x, the third direction z is perpendicular to the first direction x and the second direction y, and the shaped surface N has a partial region deviating from the reference plane P along the third direction z, where the "deviating from the reference plane P" means not coinciding with the reference plane P or having a gap with the reference plane P.

In these embodiments, at least one of the first end surface 101 and the second end surface 102 in the electrode plate 10 is arranged as the shaped surface N, so that when the electrode plate 10 forms a multi-layer staked and wound electrode assembly 100 by winding, or a plurality of electrode plates 10 are stacked along the third direction z to form a laminated electrode assembly 100, formation of a thick right-angle step at the end of the electrode plate 10 can be avoided. As an electrode assembly 100 swells after long-term use of a battery cell 200, the electrode assembly 100 exerts an acting force on a housing 210 after swelling, and the housing 210 exerts a reaction force on the electrode assembly 100 at the same time. In this application, reduced thickness at the end of the electrode plate 10 can alleviate the problem of stress concentration when the electrode plate 10 is subjected to the reaction force exerted by the housing 210 on the electrode assembly 100, prevent displacement or deformation of the electrode plate 10 at the end, and prevent deformation of the electrode assembly 100, thus alleviating fall-off of an active substance from the electrode plate 10 due to extrusion. Therefore, such improvements can guarantee performance of the battery cell 200 after long-term use.

For example, the electrode plate 10 is used to form the wound electrode assembly 100. If the two first end surfaces 101 of both the positive electrode plate and the negative electrode plate are arranged as shaped surfaces N, the problem of stress concentration at the starting end and finishing end of each of the positive electrode plate and negative electrode plate can be alleviated, displacement or deformation at the starting end of winding and finishing end of winding can be reduced, and collapse of a central hole of the winding due to deformation of the entire electrode assembly 100 can be prevented; and in addition, fall-off of the active substance from the electrode plate 10 due to extrusion can also be alleviated. If the second end surface 102 of the positive electrode plate is arranged as the shaped surface N, because at the end of the electrode assembly 100 in the winding direction, the negative electrode plate exceeds the positive electrode plate in width, and the positive electrode plate is sandwiched between adjacent negative electrode plates, the problem of stress concentration of the positive electrode plate in the region where the second end surface 102 is located can be alleviated, deformation of the second end surface 102 of the positive electrode plate due to extrusion by an adjacent negative electrode plate can be prevented, and fall-off of the active substance from the electrode plate 10 due to extrusion can also be alleviated.

In some embodiments, as shown in FIG. 10, the shaped surface N is flat and forms a preset angle θ with the reference plane P, the preset angle θ being not equal to 90°. If the angle between the shaped surface N and the reference plane P is defined as the preset angle θ, θ is an acute angle.

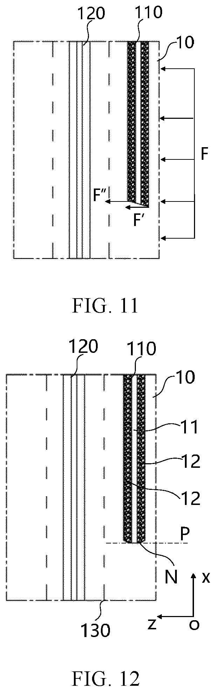

As shown in FIG. 11, the first electrode plate 110 is located on an outer side of the second electrode plate 120. If an outer side of the first electrode plate 110 is subjected to an acting force F during operation or assembly of a battery, the acting force F acting on the part with the beveled angle cannot be transferred to the second electrode plate 120, and only an acting force F" acting on the thickest part of the first electrode plate 110 can be transferred to the second electrode plate 120. Therefore, presence of the shaped surface N at the end of the first electrode plate 110 leads to increased stressed area of a step in this region, thus reducing local pressure, and in turn alleviating stress concentration.

In these embodiments, the shaped surface N is arranged to be inclined for the electrode plate 10 to form a wedge shape at the end, so that when the electrode plate 10 is subjected to an acting force at the end, transfer of the acting force to an adjacent electrode plate 10 can be reduced, a local pressure at the end can be reduced, and the stress concentration can be alleviated. In addition, when the end of the electrode plate 10 is arranged as an inclined surface, the processing technology is simple, facilitating setting of a suitable tilt angle as required, and it is also easy to guarantee consistency of tilt angles, so as to guarantee consistency of sizes of the electrode plates 10 during mass production, thus guaranteeing consistent performance of the battery cells 200.

In some embodiments, the shaped surface N extends in a curved way along the third direction z.

For example, the shaped surface N may form a continuous curved surface along the entire third direction z, and the curved surface may be non-planar in any way.

For example, the shaped surface N may protrude toward an outer side of the end of the electrode plate 10, or may recess inward, or may be a surface with a combination of concave and convex shapes. The shaped surface N protruding outward can reduce the contact between two ends of end surfaces of the electrode plate 10 in the thickness direction and adjacent electrode plates 10 or the housing 210, preventing the edge part from forming burrs to damage the separator 130, and reducing the risk of short circuit in the operating process of the electrode assembly 100. The shaped surface N recessing inward can increase the contact area between the end of the electrode plate 10 and a surface of the adjacent electrode plate 10 or the housing 210, increasing supporting force, reducing pressure on the end, and thereby alleviating the problem of stress concentration.

In these embodiments, the shaped surface N is arranged as a curved surface, so that a shape of the end surface of the electrode plate 10 can be flexibly arranged based on the problem of stress concentration in different electrode assemblies 100 during operation, the problem of short circuit caused by burrs at the end of the electrode plate damaging the separator 130, and stresses at two ends of the electrode plate 10 in the thickness direction, maintaining good performance of the battery cell 200 even after long-term operation.

In some embodiments, as shown in FIG. 12, the shaped surface N is an arc surface that protrudes outward in a middle region in the third direction z. The arc surface may be a circular arc surface or in other shapes. In such structure, the shaped surface N has regions on two sides deviating from the reference plane P along the thickness direction of the electrode plate 10.

In these embodiments, the shaped surface N is arranged as an arc surface, which is easy to process and shape, so as to guarantee consistency of sizes of the electrode plates 10 during mass production, thus guaranteeing consistent performance of the battery cells 200. Moreover, the shaped surface N protruding outward can reduce the contact between two ends of end surfaces of the electrode plate 10 in the thickness direction and adjacent electrode plates 10 or the housing 210, preventing the edge part from forming burrs to damage the separator 130, and reducing the risk of short circuit in the operating process of the electrode assembly 100; and the electrode plate 10 has no sharp corner part at the end, which can enhance the overall strength of the end of the electrode plate 10, and greatly reduce the risk of fracture of the end of the electrode plate 10 during assembly or battery use. In addition, both sides of the end of the electrode plate 10 in the thickness direction comes in contact with other electrode plates or the housing 210, and the arc surface that protrudes outward in the middle region can make the end of the electrode plate 10 symmetrical on two sides in the thickness direction, which facilitates a more uniform distribution of stresses on both sides, thus reducing stress concentration.

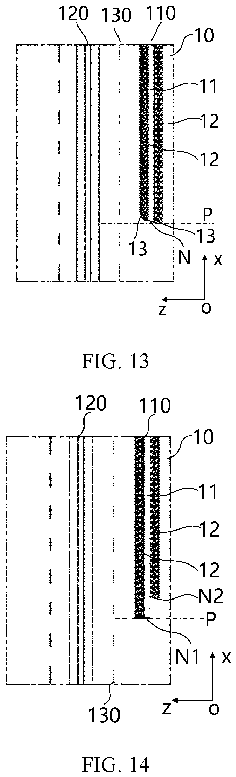

In some embodiments, as shown in FIG. 13, a transition angle 13 is provided between adjacent edges of the shaped surface N and a side surface of the electrode plate 10, and the side surface of the electrode plate 10 is perpendicular to the third direction z. For example, the transition angle 13 may be a rounded or beveled angle.

In these embodiments, provision of the transition angle 13 at the joint between the shaped surface N and the side surface of the electrode plate 10 can avoid a sharp part at the end of the electrode plate 10, thus preventing formation of burrs or the sharp part from damaging the separator 130 when extruded, and reducing the risk of short circuit during operation of the electrode assembly 100; and can also enhance strength of the end of the electrode plate 10 at the edge, thus reducing the risk of deformation of the electrode plate 10 at the end or fall-off of the active substance. In addition, provision of the transition angle 13 can reduce transfer of an acting force from the end of the electrode plate 10 to an adjacent electrode plate 10, thus reducing the overall deformation of the electrode assembly 100.

In some embodiments, as shown in FIG. 14, the electrode plate 10 includes a current collector 11 and a coating 12, where the coating 12 is provided on a side surface of the current collector 11 in the third direction z. The shaped surface N includes a first segmented surface N1 and a second segmented surface N2, the first segmented surface N1 is located on the current collector 11, the second segmented surface N2 is located on the coating 12, and the second segmented surface N2 is retracted inward a preset distance along the first direction x with respect to the first segmented surface N1.

In such structure, the shaped surface N is a stepped surface formed by the first segmented surface N1 and the second segmented surface N2, and the second segmented surface N2 may be perpendicular to a surface where the current collector 11 is attached to the coating 12 or may be inclined with respect to the surface where the current collector 11 is attached to the coating 12. The shaped surface N forms a stepped surface in the thickness direction of the electrode plate 10, and for the electrode plate 10 with coatings 12 provided on both sides of the current collector 11, the coating 12 on one or both sides can be made to be retracted inward a preset distance with respect to the current collector 11. If the end of the electrode plate 10 is located on the outermost layer of the electrode assembly 100, the coating 12 located on an outer side can be retracted inward a preset distance, so that the separator 130 on the outer side of the electrode plate 10 can wrap to form a slope structure, and thickness of the step at the end of the electrode plate 10 can be reduced without needing to apply an external force to the end of the electrode plate 10 to make the electrode plate 10 attached to an inner-layer electrode plate 10, thus reducing deformation of the end of the electrode plate 10.

For example, when the coating 12 is being applied, a protective layer may be provided at the end position.

In these embodiments, provision of the coating 12 on one side at the end position of the current collector 11 or no coating 12 provided on either side of the current collector 11 can reduce thickness of the step formed at the end position of the electrode plate 10, so that the step facilitates a gradual change in stress when subjected to an external force, so as not to generate large stress.

In some embodiments, the electrode plate 10 includes a current collector 11 and a coating 12, where the coating 12 is provided on a side surface of the current collector 11 in the third direction z. the current collector 11 includes a body portion 111 and a tab portion 112, the tab portion 112 protrudes outward from an end surface of the body portion 111 in the second direction y, and the shaped surface N is provided in a region of the second end surface 102 without the coating 12 excluding the tab portion 112.

The region of the second end surface 102 without the coating 12 excluding the tab portion 112 includes: a first end surface segment 102Athat is on the body portion 111 and located between adjacent tab portions 112, a second end surface segment 102B that is on the body portion 111 and located outside the outermost two tab portions 112, and a third end surface segment 102C that is at the root of the tab portion 112 and provided with the coating 12. In addition, the second end surface 102 further includes a fourth end surface segment 102D on the tab portion 112 without the coating 12. On the side where the tab portion 112 is located, the second end surface 102 is a zigzag structure.

Since the second end surface 102 of the electrode plate 10 is thick in the region with the coating 12 and is thin in the region of the tab portion 112 without the coating 12 where only the coil is present, the shaped surface N being provided in the region of the second end surface 102 without the coating 12 excluding the tab portion 112 can prevent the formation a thick step on the second end surface 102 and reduce the processing difficulty.

In some embodiments, the electrode plate 10 is a positive electrode plate, the coating 12 includes an active substance layer 121 and an insulating layer 122 provided side by side along the second direction y, the insulating layer 122 is located on a side of the active substance layer 121 closer to the tab portion 112 in the second direction y, and for the second end surface 102 on the side closer to the tab portion 112, the shaped surface N is coated with a polymer generated by melting of the insulating layer.

For example, a material used for the insulating layer 122 may include an inorganic filler and a binder. The inorganic filler includes one or more of boehmite, aluminum oxide, magnesium oxide, titanium dioxide, zirconium oxide, silicon dioxide, silicon carbide, boron carbide, calcium carbonate, aluminum silicate, calcium silicate, potassium titanate, and barium sulfate. The binder includes one or more of polyvinylidene fluoride, polyacrylonitrile, polyacrylic acid, polyacrylate, polyacrylic acid-acrylate, polyacrylonitrile-acrylic acid, and polyacrylonitrile-acrylate.

When the shaped surface N is formed using laser die cutting, heat is generated. For the second end surface 102 on the side closer to the tab portion 112, the insulating layer 122 closer to the second end surface 102 is melted, and the polymer generated covers the shaped surface N, so as to protect the shaped surface N, prevent metal powder or active substance powder generated on the die-cut surface from falling into the electrode assembly 100 during assembly or use, which otherwise causes short circuit, and also prevent a sharp part or burrs from being formed on the die-cut surface to avoid short circuit caused by pierced separator 130 during assembly or use.

The following provides some embodiments of the electrode assembly 100 based on the electrode plate 10 in this application. The flat wound electrode assembly 100 shown in FIG. 4 to FIG. 9 is used as an example for illustration.

In some embodiments, the electrode assembly 100 includes a first electrode plate 110 and a second electrode plate 120 with opposite polarities, where at least one of the first electrode plate 110 and the second electrode plate 120 is the electrode plate 10 according to the foregoing embodiments. For example, the shaped surface N may be provided only on an end surface of the first electrode plate 110 or only on an end surface of the second electrode plate 120, or the shaped surface N is provided on end surfaces of both the first electrode plate 110 and the second electrode plate 120, so as to achieve an optimal effect of alleviating stress concentration.

In some embodiments, as shown in FIG. 5, the electrode assembly 100 is a wound structure, and in a winding direction of the wound structure, at least one of a first starting end E1 and a first finishing end S1 of the first electrode plate 110 and at least one of a second starting end E2 and a second finishing end S2 of the second electrode plate 120 are provided with the shaped surface N. If the first direction x is defined as a length direction of the electrode plate 10, the first end surface 101 is provided with the shaped surface N.

In these embodiments, in the wound electrode assembly 100, if the shaped surface N is provided at the finishing end of the first electrode plate 110 and/or second electrode plate 120, when the electrode assembly 100 swells and acts on the housing 210, the housing 210 applies a reaction force to the outermost-layer electrode plate 10 of the electrode assembly 100. Provision of the shaped surface N can avoid the formation of a thick step at the first finishing end S1 or the second finishing end S2, alleviate the problem of stress concentration under the extrusion of the housing 210, reduce displacement or deformation at the finishing end of the electrode plate 10, and alleviate fall-off of the active substance from the electrode plate 10 due to extrusion. In addition, reduced stress on an outer layer leads to reduced stress transferred to an inner layer, thus alleviating the overall deformation of the electrode assembly 100. If the shaped surface N is provided at the starting end of the first electrode plate 110 and/or second electrode plate 120, when an acting force applied to the electrode assembly 100 by the housing 210 is transferred to an inner layer, displacement or deformation at the starting end can be reduced, fall-off of the active substance from the electrode plate 10 can be alleviated, and collapse of a central hole of the electrode assembly 100 can be prevented.

In some embodiments, still referring to FIG. 5, the shaped surface N is inclined, and the shaped surface N of at least one of the first finishing end S1 and the second finishing end S2 forms an acute angle with an inner side surface in a radial direction of the wound structure; and/or the shaped surface n of at least one of the first starting end E1 and the second starting end E2 forms an acute angle with an outer side surface in the radial direction of the wound structure.

In these embodiments, for the first finishing end S1 of the first electrode plate 120 or the second finishing end S2 of the second electrode plate 120 located at the outermost layer of the electrode assembly 100, the shaped surface N forms an acute angle with the inner side surface in a radial direction of the wound structure, so that the separator 130 on the outermost side of the electrode assembly 100 can wrap the acute angle to form a slope structure, the first finishing end S1 or the second finishing end S2 can be naturally attached to an inner-layer electrode plate 10, while thickness of the step at the end of the electrode plate 10 can be reduced without needing to apply an external force to the first finishing end S1 or the second finishing end S2 to make them attached to the inner-layer electrode plate 10, thus reducing deformation of the first finishing end S1 or the second finishing end S2, preventing the separator 130 from being damaged due to inward pressing of the finishing end of the electrode plate 10, and improving the reliability and safety of the electrode assembly 100 in operation.

For the first starting end E1 and the second starting end E2, if the shaped surface N forms an acute angle with the outer side surface in the radial direction of the wound structure, the contact area between the first starting end E1 or the second starting end E2 and an adjacent outer-layer electrode plate 10 can be increased, and a supporting force of the adjacent outer-layer electrode plate 10 on the first starting end E1 or the second starting end E2 can be increased, thus making the starting end less likely to warp, reducing the possibility of displacement or deformation of the end, and improving the reliability and safety of the electrode assembly 100 in operation.

In some embodiments, as shown in FIG. 6, the first electrode plate 110 is a negative electrode plate, the second electrode plate 120 is a positive electrode plate, and in a winding axis K consistent with the second direction y, a second end surface 102 of the first electrode plate 110 exceeds a second end surface 102 of the second electrode plate 120, the second end surface 102 of the first electrode plate 110 having the shaped surface N.

In these embodiments, because at the end of the electrode assembly 100 in the winding direction K, the negative electrode plate exceeds the positive electrode plate in width, the positive electrode plate is sandwiched between adjacent negative electrode plates, and the second end surface 102 of the first electrode plate 110 has the shaped surface N, the problem of stress concentration of the positive electrode plate in the region where the second end surface 102 is located can be alleviated, deformation of the second end surface 102 of the positive electrode plate due to extrusion by an adjacent negative electrode plate can be prevented, and fall-off of the active substance from the electrode plate 10 due to extrusion can be alleviated, thus improving the performance of the electrode assembly 100 in use.

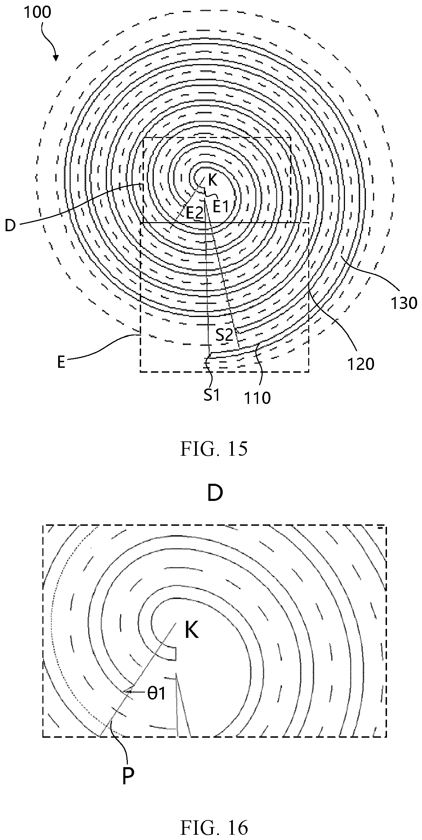

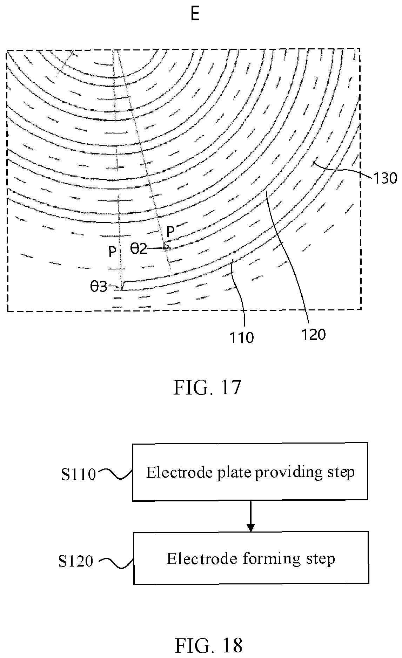

In some other embodiments, FIG. 15 shows a cylindrical electrode assembly 100, and FIG. 16 is an enlarged view of position D in FIG. 15. The second starting end E2 of the second electrode plate 120 is provided with a shaped surface N, the shaped surface N being inclined. With a connecting line between the winding center and the outermost end of the shaped surface N as a reference plane P, an included angle 01 is formed between the inclined surface and the reference plane P. The first starting end E1 of the first electrode plate 120 is not provided with the shaped surface N. FIG. 17 is an enlarged view of position E in FIG. 15. The first finishing end S1 of the first electrode plate 110 and the second finishing end S2 of the second electrode plate 120 are both provided with a shaped surface N, the shaped surface N being inclined. With a connecting line between the winding center and the outermost end of the shaped surface N as a reference plane P, an included angle θ2 is formed between the shaped surface N of the first finishing end S1 and the reference plane P, and an included angle θ3 is formed between the shaped surface N of the second finishing end S2 and the reference plane P.

In addition, this application provides a manufacturing method of electrode assembly 100. As shown in FIG. 15, the manufacturing method includes the following steps.

S110. An electrode plate providing step: Provide a first electrode plate 110 and a second electrode plate 120 with opposite polarities, where at least one of the first electrode plate 110 and the second electrode plate 120 is an electrode plate 10 having a structure as follows: the electrode plate 10 has a first end surface 101 in a first direction x and a second end surface 102 in a second direction y, the second direction y being perpendicular to the first direction x, at least one of the first end surface 101 and the second end surface 102 has a shaped surface N, the shaped surface N has a partial region deviating from a reference plane P along a third direction z, the reference plane P is constructed to be perpendicular to the first direction x and pass the outermost edge of the shaped surface N in the first direction x, and the third direction z is perpendicular to the first direction x and the second direction y. For example, the shaped surface N may be formed by cutting with a cutting tool.

S120. An electrode forming step: Assemble the first electrode plate 110 and the second electrode plate 120 into the electrode assembly 100. For example, the electrode assembly 100 may be formed by means of winding or lamination.

In the manufacturing method of these embodiments, at least one of the first end surface 101 and the second end surface 102 in the electrode plate 10 is arranged as the shaped surface N, so that when the electrode plate 10 forms a multi-layer staked and wound electrode assembly 100 by winding, or a plurality of electrode plates 10 are stacked along the third direction z to form a laminated electrode assembly 100, reduced thickness at the end of the electrode plate 10 can alleviate the problem of stress concentration when the electrode plate 10 is subjected to the reaction force exerted by the housing 210 on the electrode assembly 100, prevent displacement or deformation of the electrode plate 10 at the end, and prevent deformation of the electrode assembly 100, thus alleviating fall-off of an active substance from the electrode plate 10 due to extrusion. Therefore, such improvements can guarantee performance of a battery cell 200 after long-term use.

Finally, this application provides a manufacturing apparatus 500 of electrode assembly 100. As shown in FIG. 16, the manufacturing apparatus 500 includes an electrode plate providing device 510 and an electrode forming device 520.

The electrode plate providing device 510 is configured to provide a first electrode plate 110 and a second electrode plate 120 with opposite polarities, where at least one of the first electrode plate 110 and the second electrode plate 120 is an electrode plate 10 having a structure as follows: the electrode plate 10 has a first end surface 101 in a first direction x and a second end surface 102 in a second direction y, the second direction y being perpendicular to the first direction x, at least one of the first end surface 101 and the second end surface 102 has a shaped surface N, the shaped surface N has a partial region deviating from a reference plane P along a third direction z, the reference plane P is constructed to be perpendicular to the first direction x and pass the outermost edge of the shaped surface N in the first direction x, and the third direction z is perpendicular to the first direction x and the second direction y.

The electrode forming device 520 is configured to assemble the first electrode plate 110 and the second electrode plate 120 into the electrode assembly 100.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An electrode plate (10), having a first end surface (101) in a first direction (x) and a second end surface (102) in a second direction (y), the second direction (y) being perpendicular to the first direction (x); wherein
at least one of the first end surface (101) and the second end surface (102) has a shaped surface (N), the shaped surface (N) has a partial region deviating from a reference plane (P) along a third direction (z), the reference plane (P) is constructed to be perpendicular to the first direction (x) and pass the outermost edge of the shaped surface (N) in the first direction (x), and the third direction (z) is perpendicular to the first direction (x) and the second direction (y).

2. The electrode plate (10) according to claim 1, wherein the shaped surface (N) is flat and forms a preset angle (Θ) with the reference plane (P), the preset angle (θ) being not equal to 90°.

3. The electrode plate (10) according to claim 1, wherein the shaped surface (N) extends in a curved way along the third direction (z).

4. The electrode plate (10) according to claim 3, wherein the shaped surface (N) is an arc surface that protrudes outward in a middle region in the third direction (z).

5. The electrode plate (10) according to any one of claims 1 to 4, wherein a transition angle (13) is provided between adjacent edges of the shaped surface (N) and a side surface of the electrode plate (10), and the side surface of the electrode plate (10) is perpendicular to the third direction (z).

6. The electrode plate (10) according to any one of claims 1 to 5, comprising:
a current collector (11); and
a coating (12) provided on a side surface of the current collector (11) in the third direction (z);
wherein the shaped surface (N) comprises a first segmented surface (N1) and a second segmented surface (N2), the first segmented surface (N1) is located on the current collector (11), the second segmented surface (N2) is located on the coating (12), and the second segmented surface (N2) is retracted inward a preset distance along the first direction (x) with respect to the first segmented surface (N1).

7. The electrode plate (10) according to any one of claims 1 to 6, comprising:
a current collector (11); and
a coating (12) provided on a side surface of the current collector (11) in the third direction (z); wherein
the current collector (11) comprises a body portion (111) and a tab portion (112), the tab portion (112) protrudes outward from an end surface of the body portion (111) in the second direction (y), and the shaped surface (N) is provided in a region of the second end surface (102) without the coating (12) excluding the tab portion (112).

8. The electrode plate (10) according to claim 7, wherein the electrode plate (10) is a positive electrode plate, the coating (12) comprises an active substance layer (121) and an insulating layer (122) provided side by side along the second direction (y), the insulating layer (122) is located on a side of the active substance layer (121) closer to the tab portion (112) in the second direction (y), and the shaped surface (N) is coated with a polymer generated by melting of the insulating layer (122).

9. An electrode assembly (100), comprising a first electrode plate (110) and a second electrode plate (120) with opposite polarities, wherein at least one of the first electrode plate (110) and the second electrode plate (120) is the electrode plate (10) according to any one of claims 1 to 8.

10. The electrode assembly (100) according to claim 9, wherein the electrode assembly (100) is a wound structure, and in a winding direction of the wound structure, at least one of a first starting end (E1) and a first finishing end (S1) of the first electrode plate (110) and at least one of a second starting end (E2) and a second finishing end (S2) of the second electrode plate (120) are provided with the shaped surface (N).

11. The electrode assembly (100) according to claim 10, wherein the shaped surface (N) is inclined, and the shaped surface (N) of at least one of the first finishing end (S1) and the second finishing end (S2) forms an acute angle with an inner side surface in a radial direction of the wound structure; and/or the shaped surface (N) of at least one of the first starting end (E1) and the second starting end (E2) forms an acute angle with an outer side surface in the radial direction of the wound structure.

12. The electrode assembly (100) according to claim 10 or 11, wherein the first electrode plate (110) is a negative electrode plate, the second electrode plate (120) is a positive electrode plate, and in a winding axis (K) consistent with the second direction (y), a second end surface (102) of the first electrode plate (110) exceeds a second end surface (102) of the second electrode plate (120), the second end surface (102) of the first electrode plate (110) having the shaped surface (N).

13. A battery cell (200), comprising:
a housing (210) having an opening;
the electrode assembly (100) according to any one of claims 9 to 12, disposed in the housing (210); and
an end cover assembly (220) configured to close the opening.

14. A battery (300), comprising a box (301) and the battery cell (200) according to claim 13, wherein the battery cell (200) is disposed in the box (301).

15. An electric apparatus (400), comprising the battery (300) according to claim 14, wherein the battery (300) is configured to supply electric energy for the electric apparatus (400).

16. A manufacturing method of electrode assembly (100), comprising:
an electrode plate providing step: providing a first electrode plate (110) and a second electrode plate (120) with opposite polarities, wherein at least one of the first electrode plate (110) and the second electrode plate (120) is an electrode plate (10) having a structure as follows: the electrode plate (10) has a first end surface (101) in a first direction (x) and a second end surface (102) in a second direction (y), the second direction (y) being perpendicular to the first direction (x), at least one of the first end surface (101) and the second end surface (102) has a shaped surface (N), the shaped surface (N) has a partial region deviating from a reference plane (P) along a third direction (z), the reference plane (P) is constructed to be perpendicular to the first direction (x) and pass the outermost edge of the shaped surface (N) in the first direction (x), and the third direction (z) is perpendicular to the first direction (x) and the second direction (y); and
an electrode forming step: assembling the first electrode plate (110) and the second electrode plate (120) into the electrode assembly (100).

17. A manufacturing apparatus (500) of electrode assembly (100), comprising:
an electrode plate providing device (510) configured to provide a first electrode plate (110) and a second electrode plate (120) with opposite polarities, wherein at least one of the first electrode plate (110) and the second electrode plate (120) is an electrode plate (10) having a structure as follows: the electrode plate (10) has a first end surface (101) in a first direction (x) and a second end surface (102) in a second direction (y), the second direction (y) being perpendicular to the first direction (x), at least one of the first end surface (101) and the second end surface (102) has a shaped surface (N), the shaped surface (N) has a partial region deviating from a reference plane (P) along a third direction (z), the reference plane (P) is constructed to be perpendicular to the first direction (x) and pass the outermost edge of the shaped surface (N) in the first direction (x), and the third direction (z) is perpendicular to the first direction (x) and the second direction (y); and
an electrode forming device (520) configured to assemble the first electrode plate (110) and the second electrode plate (120) into the electrode assembly (100).
